# EUROPEAN PATENT APPLICATION

(11) **EP 2 249 056 A1**
(43) Date of publication of application: **10.11.2010**
(21) Application number: 09715116.1
(22) Date of filing: 27.02.2009
(51) Int. Cl.: F16F 1/36, F16F 15/08

(54) **VIBRATION-DAMPING DEVICE**

(30) Priority: 28.02.2008 JP 2008048560
(71) Applicant: Bridgestone Corporation, Tokyo 104-8340 (JP)
(72) Inventor: SASAKI, Satoshi, Yokohama-shi Kanagawa 244-8510 (JP)
(74) Representative: Oxley, Robin John George
(86) International application number: PCT/JP2009/053762
(87) International publication number: WO 2009/107810

(57) **Abstract**

This vibration-damping device (10) includes: a first main body component (11) that is linked to a vibration receiving portion; a second main body component (12) that is placed on the opposite side from a vibration generating portion so as to sandwich the first main body component (11); a linking component (13) that penetrates through the first main body component (11) and mutually links together the second main body component (12) and the vibration generating portion; main body rubber (14) that elastically links together the first main body component (11) and the second main body component (12) and that has the linking component (13) inserted through its interior space (K); a tubular stopper fitting (15) that is provided on the first main body component (11) and that surrounds from the outward side in the radial direction a rod-shaped contact portion (16) that is provided in the linking component (13); and tubular stopper rubber (17) that is mounted on at least one of an inner surface of the stopper fitting (15) and the contact portion (16). Moreover, distances between mutually facing surfaces formed by internal surfaces of the stopper fitting (15) and the contact portion (16) which are facing each other are uniform over the entire area of each of the facing surface areas. According to this vibration-damping device (10), the load applied to the stopper rubber (17) is reduced, and the durability of the vibration-damping device (10) is improved.

## Description

### TECHNICAL FIELD

The present invention relates to a vibration-damping device that is used, for example, in an automobile or in industrial machinery and the like. Priority is claimed on Japanese Patent Application No. 2008-48560, filed February 28, 2008, the contents of which are incorporated herein by reference.

### BACKGROUND ART

As this type of vibration-damping device, a device such as the one described, for example, in Patent document 1 (see below) is conventionally known in which there are provided a first main body component that is linked to a vibration receiving portion, a second main body component that is placed on the opposite side from a vibration generating portion so as to sandwich the first main body component, a linking component that penetrates through the first main body component and links together the second main body component and the vibration generating portion, main body rubber that elastically links together the first main body component and the second main body component and which has the linking component inserted through its interior space, a tubular stopper fitting that is provided on the first main body component and that surrounds from the outward side in the radial direction a rod-shaped contact portion that is provided in the linking component, and tubular stopper rubber that is mounted on at least one of an inner surface of the stopper fitting and the contact portion.
Here, horizontal cross sections of both the inner surface of the stopper fitting and the contact portion are formed in a circular shape, and both the inner surface of the stopper fitting and the contact portion are positioned on the same axis. Moreover, the inner diameter of the stopper fitting is larger than the outer diameter of the contact portion.
If vibration from the vibration generating portion is input into a vibration-damping device having the above described structure, the main body rubber is elastically deformed which results in the vibration being dampened and absorbed. At this time, irrespective of whether the input direction of the vibration into the vibration-damping device is a vertical direction or a horizontal direction, the vibration is dampened and absorbed by the main body rubber undergoing elastic deformation.
In addition, when this vibration-damping device is installed, for example, in a vehicle, then if, due to the inertial force and the like generated when the vehicle accelerates or decelerates or turns, a load is input into the vibration-damping device in a horizontal direction such as the front-rear direction or left-right direction of the vehicle so that the contact portion of the linking component and stopper fitting are displaced relatively in this horizontal direction by a larger amount than the gap between the outer circumferential surface of the contact portion and the stopper rubber, the main body rubber is elastically deformed and, at the same time, due to the contact portion and the stopper fitting coming into mutual contact via the stopper rubber, the stopper rubber is also elastically deformed. As a result of this, the relative displacement between the linking component and the stopper fitting and stopper rubber in the horizontal direction is restricted, and the load in the horizontal direction is absorbed by the resistance generated by the elastic deformation of the main body rubber and stopper rubber.
[Patent document 1] Japanese Patent Application, First Publication No. 2007-321964

### DISCLOSURE OF THE INVENTION

### [Problems to be Solved by the Invention]

However, in the above described conventional vibration-damping device, both the inner surface of the stopper fitting and the contact portion of the linking component have circular horizontal cross sections and are positioned on the same axis. In addition, the inner diameter of the stopper fitting is larger than the outer diameter of the contact portion. Because of this, even if, as was described above, the contact portion and the inner surface of the stopper fitting come into mutual contact with each other via the stopper rubber without the linking component being tilted, then the contact portion and the inner surface of the stopper fitting come into line contact along the axis of the linking component. In contrast, if the linking component is tilted and, as was described above, the contact portion and the inner surface of the stopper fitting come into contact, then this contact is point contact.
Namely, irrespective of the attitude of the linking component when, as was described above, the contact portion and the inner surface of the stopper fitting come into mutual contact with each other via the stopper rubber, an excessive load is applied to the stopper rubber and there is a possibility that, for example, cracks and the like will be generated easily.

This invention was conceived in view of the above described circumstances and it is an object thereof to provide an vibration-damping device that makes it possible to reduce a load which is applied to stopper rubber located between a stopper fitting and a contact portion of a linking component, and thereby enables an improvement in durability to be achieved.

### [Means for Solving the Problem]

In order to solve the above described problems and achieve the aforementioned object, the vibration-damping device of the present invention is provided with the following structure. Namely, the damping apparatus of the present invention includes: a first main body component that is linked to a vibration receiving portion; a second main body component that is placed on the opposite side from a vibration generating portion so as to sandwich the first main body component; a linking component that penetrates through the first main body component and mutually links together the second main body component and the vibration generating portion; main body rubber that elastically links together the first main body component and the second main body component and that has the linking component inserted through its interior space; a tubular stopper fitting that is provided on the first main body component and that surrounds from the outward side in the radial direction a rod-shaped contact portion that is provided in the linking component; and tubular stopper rubber that is mounted on at least one of an inner surface of the stopper fitting and the contact portion. Furthermore, in the vibration-damping device of the present invention, distances between mutually facing surfaces of the stopper fitting internal surfaces and the contact portion which are facing each other are uniform over the entire area of each of the facing surface areas.
In this invention, because the above described structure is used, when this vibration-damping device is installed, for example, in a vehicle, then when, due to the inertial force and the like generated when the vehicle accelerates or decelerates or turns, a load is input into the vibration-damping device in a horizontal direction such as the front-rear direction or left-right direction of the vehicle so that, without the linking component becoming tilted, the contact portion of the linking component and the stopper fitting are displaced relatively in the horizontal direction by a larger amount than the gaps between the contact portion and the stopper rubber, and the internal surfaces of the stopper fitting and the respective facing surfaces of the contact portion come into mutual contact with each other via the stopper rubber, it is possible to make the mutually facing surface areas of these mutually facing surfaces contact with each other over their entire surface areas.
In contrast, when the contact portion of the linking component and the stopper fitting are displaced relatively in the horizontal direction in the manner described above while the linking component is in a tilted state, so that the internal surfaces of the stopper fitting and the respective facing surfaces of the contact portion come into mutual contact with each other via the stopper rubber, it is possible to make the mutually facing surfaces make line contact with each other at least over their entire length in the direction of their horizontal cross sections.
As a result of the above, compared with a conventional vibration-damping device, it is possible to reduce the load applied to the stopper rubber, and it is possible to suppress the occurrence of cracks and the like and obtain an improvement is durability.

Here, it is also possible for the shapes of horizontal cross sections of the internal surface of the stopper fitting and the contact portion to be polygonal.
In this case, it is possible to easily alter the settings for the distances between the mutually facing surfaces, and thereby easily respond to modifications to the specifications of, for example, a vehicle in which this vibration-damping device is installed.

Moreover, it is also possible for the stopper rubber to be mounted on the stopper fitting, and to be formed integrally as a single body with the main body rubber.
In this case, it is possible to minimize the overall number of components in the vibration-damping device and thereby limit manufacturing costs.

Furthermore, it is also possible for the vibration-damping device to be installed and used in a vehicle, and for at least one of the front-rear direction and left-right direction of the vehicle to be designated, and when this vibration-damping device is installed in a vehicle, for concavity and convexity portions which face in the front-rear direction of the vehicle to be formed in an internal surface of this stopper rubber.
In this case, because concavity and convexity portions are formed on the first internal surfaces of the stopper rubber, after a load in the front-rear direction of a vehicle has been input into the vibration-damping device, and the contact portion and the stopper fitting have been displaced relatively in a horizontal direction, and the internal surface of the stopper fitting and the respective facing surfaces of the contact portion have come into mutual contact via the stopper rubber, then in the process in which the contact portion presses against the stopper rubber, the convex portions of the concavity and convexity portions are pushed down by the contact portion. Accordingly, it is possible to control any sudden increase in the load acting on the both the contact portion and the stopper fitting when the contact portion and the stopper rubber come into mutual contact. As a result, it is possible to effectively absorb the load in the front-rear direction of the vehicle which has a great effect on riding comfort, and thereby provide a vehicle with superior riding comfort.
Note that the front-rear direction and the left-right direction of a vehicle in which this vibration-damping device is installed are designated in the vibration-damping device by means of the position in the first main body component where the bolt insertion hole which is used to insert a bolt which is fastened to the vibration receiving portion is formed, or by means of the position in the linking component where the bolt insertion hole which is used to insert a bolt which is fastened to the vibration generating portion is formed.

### [Effects of the Invention]

According to the present invention, it is possible to reduce a load which is applied to stopper rubber located between a stopper fitting and a contact portion of a linking component, and to thereby achieve an improvement in durability.

### BRIEF DESCRIPTION OF THE DRAWINGS

[FIG. 1] FIG. 1 is a vertical cross-sectional view showing principal portions of a vibration-damping device which illustrates a first embodiment of the present invention.
[FIG. 2] FIG. 2 is a cross-sectional view as seen along a line X-X in FIG. 1.
[FIG. 3] FIG. 3 is a cross-sectional view as seen along a line Y-Y in FIG. 1.
[FIG. 4] FIG. 4 is a cross-sectional view as seen along a line Z-Z in FIG. 3.

10 ... Vibration isolating apparatus, 11 ... First main body component, 12 ... Second main body component, 13 ... Linking component, 14 ... Main body rubber, 15 ... Stopper fitting, 16 ... Contact portion, 17 ... Stopper rubber, 20 ... Protruding portions (undulating portions), A ... Front-rear direction, B ... Left-right direction, C to F ... Distances, K ... Internal space

### BEST MODES FOR CARRYING OUT THE INVENTION

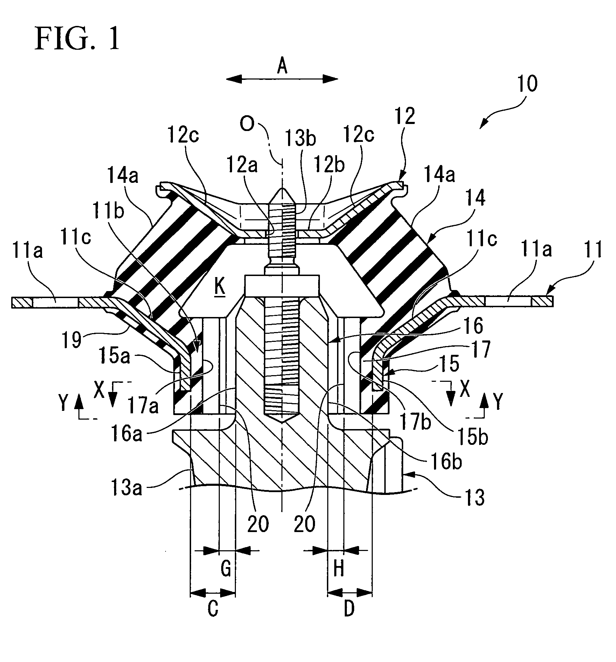

An embodiment of the vibration-damping device of the present invention will now be described with reference made to FIG. 1 through FIG. 4.
This vibration-damping device 10 is used as a mounting apparatus that supports on a vehicle body which is a vibration receiving portion a power unit that includes an engine and a gear box which is vibration generating portions in a vehicle such as an automobile. As is shown in FIG. 1, the vibration-damping device 10 is provided with a first main body component 11 that is linked to a vibration receiving portion, a second main body component 12 that is placed on the opposite side from a vibration generating portion so as to sandwich the first main body component 11 between itself and the vibration generating portion, a linking component 13 that penetrates through the first main body component 11 and links together the second main body component 12 and the vibration generating portion, main body rubber 14 that elastically links together the first main body component 11 and the second main body component 12 and which has the linking component 13 inserted through its internal space K, a tubular stopper fitting 15 that is provided on the first main body component 11 and that surrounds from the outward side in the radial direction a rod-shaped contact portion 16 that is provided in the linking component 13, and tubular stopper rubber 17 that is mounted on at least one of an inner surface of the stopper fitting 15 and the contact portion 16.

Here, the contact portion 16 of the linking component 13, the tubular stopper fitting 15, and the tubular stopper rubber 17 are each located on a common axis. Hereinafter, this common axis is referred to as a center axis O of the vibration-damping device 10, and the side in the direction of this center axis O on which the vibration generating portion is located is called the bottom side, while the side in this center axis O direction on which the second main body component 12 is located is called the top side.

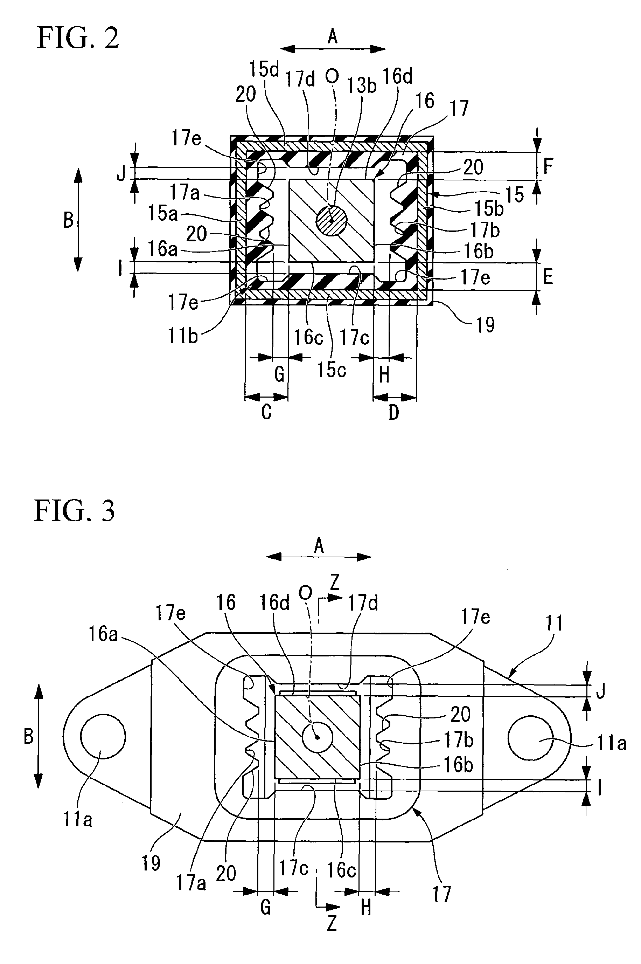

Moreover, as is shown in FIG. 1 and FIG. 3, the first main body component 11 is formed in a rectangular plate shape when viewed from above, and bolt through holes 11a through which are inserted bolts (not shown) which are fastened to the vibration receiving portion are formed separately in both end portions in the longitudinal direction of the first main body component 11. In addition, bolts through holes (not shown) through which are inserted bolts which are fastened to the vibration generating portion are formed in a main body portion 13a (described below) of the linking component 13.
In the present embodiment, the front-rear direction A and the left-right direction B of a vehicle in which this vibration-damping device 10 is installed are designated in the vibration-damping device 10 by means of these bolt through holes 11a and the like.
Hereinafter, the vibration-damping device 10 will be described in a state in which it is installed in a vehicle.

The first main body component 11 is formed in a rectangular plate shape when viewed from above which is elongated in the front-rear direction A, and a through hole 11b which is also rectangular when viewed from above and is elongated in the front-rear direction A is formed in a center portion of the first main body component 11. Portions of an aperture circumferential edge portion of the through hole 11b of the first main body component 11 which are located on both sides in the front-rear direction A and extend in the left-right direction B of the first main body component 11 are formed as sloping wall portions 11c which gradually approach each other as they extend downwards. The bolt through holes 11a are formed separately in the two end portions in the front-rear direction A of the first main body component 11.

The second body component 12 is formed in a rectangular shape when viewed from above which is elongated in the front-rear direction A, and circumferential wall portions thereof form a bowl shape by extending gradually upwards as they move from the center portion towards the outer circumferential side. In addition, a through hole 12a is formed in a center portion of the second main body component 12, namely, in a bottom portion 12b.
Of the circumferential wall portions of the second main body component 12, as is shown in FIG. 1, portions 12c in the vehicle front and rear directions which face in the front-rear direction A are parallel with the sloping wall portions 11c of the first main body component 11 when a vertical cross section of this vibration-damping device 10 is being viewed.

The linking component 13 is provided with a main body portion 13a which is formed in a block shape and is fixed to the vibration generating portion, a rod-shaped contact portion 16 which stands upright on a top surface of the main body portion 13a and is positioned inside the through hole 11b in the first main body component 11, and with a threaded shaft 13b which stands upright on a top end surface of the contact portion 16 and whose distal end portion passes inside the through hole 12a of the second main body component 12 and is positioned on the inside of the bowl-shaped second main body component 12.
In the example shown in the drawings, in the linking component 13, the main body portion 13a and the contact portion 16 are formed as a single integrated body from the same material (for example, from an aluminum alloy or the like). The threaded shaft 13b is formed as a separate component from the main body portion 13a and contact portion 16, and male threaded portions are formed separately on both end portions thereof in the directions of the center axis O. The bottom side male threaded portion is screwed into a female threaded portion which is formed in the top end surface of the contact portion 16, while a distal end portion of the top side male threaded portion passes through the through hole 12a and is positioned on the inside of the second main body component 12.

Furthermore, in the present embodiment, a horizontal cross section of the contact portion 16 is formed in a square shape and, of the four surfaces 16a, 16b, 16c, and 16d which make up this square shape, two (hereinafter, these will be called the first surface 16a and the second surface 16b) surfaces are aligned so as to face in the front-rear direction A, while the remaining two surfaces (hereinafter, these will be called the third surface 16c and the fourth surface 16d) are aligned so as to face in the left-right direction B. Moreover, in the example shown in the drawings, the surfaces 16a through 16d of this contact portion 16 are metal surfaces which are not coated with a rubber film.

The main body robber 14 is provided with a pair of legs portions 14a which are located on both sides in the front-rear direction A, and the respective leg portions 14a extend gradually towards the outer sides in the front-rear direction A as they move from the upper side on the second main body component 12 side towards the lower side on the first main body component 11 side. Top ends of the leg portions 14a are adhered to bottom surfaces of the portions 12c in the vehicle front and rear directions of the second main body component 12, while bottom ends thereof are adhered to top surfaces of the sloping wall portions 11c of the first main body component 11. The space between these leg portions 14a forms the aforementioned internal space K. Note that in the example shown in the drawings, the distal end portions of the contact portion 16 and the threaded shafts 13b of the linking component 13 are placed within this internal space K.

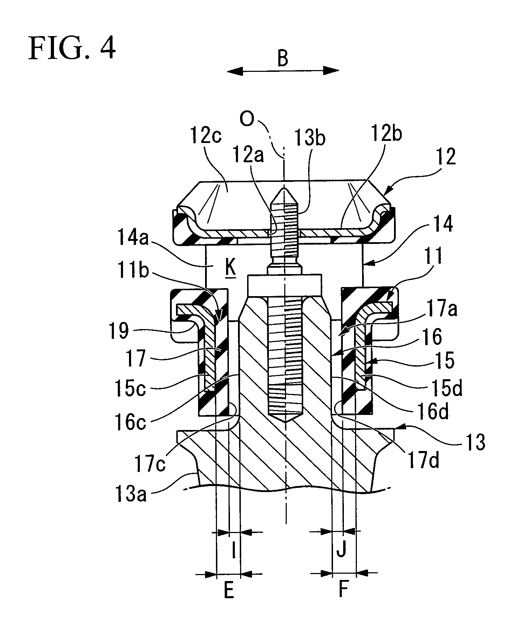

The stopper fitting 15 extends around the entire circumference of the aperture circumferential edge portion of the through hole 11b in the first main body component 11, and protrudes so as to face downwards. In addition, this stopper fitting 15 is formed in a rectangular tube shape whose horizontal cross section is elongated in the front-rear direction A. Note that in the example shown in the drawings, the stopper fitting 15 is formed as a single unit integrally with the first main body component 11.
Moreover, the stopper 15 is formed such that, as is shown in FIG. 1 and FIG. 4, when the bottom edges thereof are lined up so that their positions in the direction of the center axis O are the same around the entire circumference, the lengths in the direction of the center axis O of a first wall portion 15a and a second wall portion 15b thereof, which face in the directions of the front-rear direction A, are shorter than those of a third wall portion 15c and a fourth wall portion 15d thereof, which face in the directions of the left-right direction B. Furthermore, of the linking component 13, only the contact portion 16 thereof is surrounded from the outer side in the radial direction by an internal surface of this stopper fitting 15.

As is shown in FIG. 2, the stopper rubber 17 is mounted on the entire internal surface of the stopper fitting 15, and the stopper rubber 17 is formed in tubular shape having a rectangular internal surface whose horizontal cross section is elongated in the front-rear direction A. Of the four internal wall surfaces 17a, 17b, 17c, and 17d which make up this rectangular shape, two wall surfaces (hereinafter, referred to as the first internal wall surface 17a and the second internal wall surface 17b) are positioned so as to face in the front-rear direction A, while the remaining two wall surfaces (hereinafter, referred to as the third internal wall surface 17c and of the fourth internal wall surface 17d) are positioned so as to face in the left-right direction B. Moreover, in the example shown in the drawings, a bottom end portion of the stopper rubber 17 is located below a bottom end portion of the stopper fitting 15. Furthermore, as is shown in FIG. 2 and FIG. 3, linking portions which link the first internal wall surface 17a with the third internal wall surface 17c and with the fourth internal wall surface 17d, and linking portions which link the second internal wall surface 17b with the third internal wall surface 17c and with the fourth internal wall surface 17d, namely, four angle portions 17e which make up the rectangle are hollowed out towards the outer side of the tubular stopper rubber 17.

Here, in the present embodiment, as is shown in FIG. 1 and FIG. 4, the stopper rubber 17 is formed as a single unit integrally with the main body robber 14. Moreover, a rubber film 19 is coated onto a bottom surface of the sloping wall portion 11c of the first main body component 11 and onto an outer surface of the stopper fitting 15, and this rubber film 19 is formed as a single body integrally with the stopper rubber 17 and the main body robber 14. Moreover, in the example shown in the drawings, the stopper rubber 17 is adhered to the internal surface of the stopper fitting 15.

In addition, in the present embodiment, distances C through F between facing surfaces which mutually face each other of the internal surface of the stopper fitting 15 and the contact portion 16 of the linking component 13 are uniform over the entire surface area of each of the areas which face each other. In other words, the mutually facing surfaces formed by the internal surface of the stopper fitting 15 and the contact portion 16 which are facing each other are mutually parallel with each other over their entire mutually facing surface areas.
As is shown in FIG. 1, FIG. 2, and FIG. 4, these facing surfaces are made up of four groups, namely, a first surface 16a of the contact portion 16 and an internal surface of the first wall portion 15a of the stopper fitting 15, a second surface 16b of the contact portion 16 and an internal surface of the second wall portion 15b of the stopper fitting 15, a third surface 16c of the contact portion 16 and an internal surface of the third wall portion 15c of the stopper fitting 15, and a fourth surface 16d of the contact portion 16 and an internal surface of the fourth wall portion 15d of the stopper fitting 15.

Of these, the first surface 16a of the contact portion 16 and the internal surface of the first wall portion 15a of the stopper fitting 15 and the second surface 16b of the contact portion 16 and the internal surface of the second wall portion 15b of the stopper fitting 15 mutually face each other in the front-rear direction A. In addition, the third surface 16c of the contact portion 16 and the internal surface of the third wall portion 15c of the stopper fitting 15 and the fourth surface 16d of the contact portion 16 and the internal surface of the fourth wall portion 15d of the stopper fitting 15 mutually face each other in the left-right direction B.

In the example shown in the drawings, the distance C between the first surface 16a of the contact portion 16 and the internal surface of the first wall portion 15a of the stopper fitting 15 is equal to the distance D between the second surface 16b of the contact portion 16 and the internal surface of the second wall portion 15b of the stopper fitting 15. In addition, the distance E between the third surface 16c of the contact portion 16 and the internal surface of the third wall portion 15c of the stopper fitting 15 is equal to the distance F between the fourth surface 16d of the contact portion 16 and the internal surface of the fourth wall portion 15d of the stopper fitting 15. Moreover, the distances C and D are larger than the distances E and F.

Furthermore, in the present embodiment, convex portions (i.e., concavity and convexity portions) 20 which extend in the direction of the center axis O are formed on a first internal wall surface 17a and a second internal wall surface 17b which face in the front-rear direction A of the stopper rubber 17. In the example shown in the drawings, a plurality of the convex portions 20 are formed a predetermined distance apart in the left-right direction B on each of the first internal wall surface 17a and the second internal wall surface 17b. The protrusion heights of each of the plurality of convex portions 20 formed respectively on the first internal wall surface 17a and the second internal wall surface 17b are mutually equal with each other. Note that convex portions 20 are not formed on the third internal wall surface 17c and the fourth internal wall surface 17d which face in the left-right direction B of the stopper rubber 17, and these are formed as flat surfaces over their entire surface area. Moreover, the thickness of the portions of the stopper rubber 17 where the top faces of the convex portions 20 are positioned is thicker than the thickness of the portions of the stopper rubber 17 where the third internal wall surface 17c and the fourth internal wall surface 17d are positioned.

In addition, a gap G between the first surface 16a of the contact portion 16 and the top faces of the convex portions 20 which are formed on the first internal wall surface 17a of the stopper rubber 17 is equal to a gap H between the second surface 16b of the contact portion 16 and the top faces of the convex portions 20 which are formed on the second internal wall surface 17b of the stopper rubber 17. Moreover, a gap I between the third surface 16c of the contact portion 16 and the third internal wall surface 17c of the stopper rubber 17 is equal to a gap J between the fourth surface 16d of the contact portion 16 and the fourth internal wall surface 17d of the stopper rubber 17. Furthermore, the gaps G and H are larger than the gaps I and J.

Moreover, in the present embodiment, the gaps G through J between the mutually facing surfaces of the contact portion 16 and stopper rubber 17 which are mutually facing each other are uniform over the entire surface area of the mutually facing areas.
As is shown in FIG. 1 through FIG. 4, these facing surfaces are made up of four groups, namely, the first surface 16a of the contact portion 16 and the top faces of the convex portions 20 formed on the first internal wall surface 17a of the stopper rubber 17, the second surface 16b of the contact portion 16 and the top faces of the convex portions 20 formed on the second internal wall surface 17b of the stopper rubber 17, the third surface 16c of the contact portion 16 and the third internal wall surface 17c of the stopper rubber 17, and the fourth surface 16d of the contact portion 16 and the fourth internal wall surface 17d of the stopper rubber 17.

Of these, the first surface 16a of the contact portion 16 and the top faces of the convex portions 20 formed on the first internal wall surface 17a of the stopper rubber 17, and the second surface 16b of the contact portion 16 and the top faces of the convex portions 20 formed on the second internal wall surface 17b of the stopper rubber 17 mutually face each other in the front-rear direction A. Moreover, the third surface 16c of the contact portion 16 and the third internal wall surface 17c of the stopper rubber 17, and the fourth surface 16d of the contact portion 16 and the fourth internal wall surface 17d of the stopper rubber 17 mutually face each other in the left-right direction B.

If vibration from the vibration generating portion is input into the vibration-damping device 10 which is constructed in the manner described above, this vibration is dampened and absorbed as a result of the main body rubber 14 being elastically deformed. At this time, irrespective of whether the input direction of the vibration which is input into the vibration-damping convex 10 is the direction of the center axis O, the front-rear direction A, or the left-right direction B, this vibration is dampened and absorbed as a result of the main body rubber 14 being elastically deformed.

In addition, while a vehicle in which this vibration-damping device 10 has been installed is traveling, if, for example, due to the inertial force and the like generated when the vehicle accelerates or decelerates or turns, a load is input into the vibration-damping device 10 in a horizontal direction such as the front-rear direction A or left-right direction B so that the contact portion 16 of the linking component 13 and the stopper fitting 15 and stopper rubber 17 are displaced relatively in this horizontal direction by a larger amount than the gaps G through J between the surfaces 16a through 16d of the contact portion 16 and the stopper rubber 17, the main body rubber 14 is elastically deformed and, at the same time, due to the surfaces 16a through 16d of the contact portion 16 and the stopper rubber 17 coming into mutual contact, the stopper rubber 17 is also elastically deformed. As a result of this, the relative displacement between the contact portion 16 of the linking component 13 and the stopper fitting 15 and stopper rubber 17 in the horizontal direction is restricted, and the load in the horizontal direction is absorbed by the resistance generated by the elastic deformation of the main body rubber 14 and stopper rubber 17.

As has been described above, in the vibration-damping device 10 according to the present embodiment, the distances C to F between the mutually facing surfaces formed by the internal surfaces of the stopper fitting 15 and the contact portion 16 which are facing each other are equal over the entire surface area of the mutually facing areas. Because of this, when, due to the inertial force and the like generated when a vehicle in which this vibration-damping device 10 has been installed accelerates or decelerates or turns, a load is input into the vibration-damping device 10 in a horizontal direction such as the front-rear direction A or left-right direction B so that, without the linking component 13 becoming tilted, the contact portion 16 of the linking component 13 and the stopper fitting 15 are displaced relatively in the horizontal direction by a larger amount than the gaps G through J between the contact portion 16 and the stopper rubber 17, and so that the internal surfaces of the stopper fitting 15 and the respective facing surfaces of the contact portion 16 come into mutual contact with each other via the stopper rubber 17, it is possible to make these mutually facing surfaces come into surface contact with each other over the entire surface area of their mutually facing surfaces.

In contrast, when the contact portion 16 of the linking component 13 and the stopper fitting 15 are displaced relatively in the horizontal direction in the manner described above while the linking component 13 is in a tilted state, so that the internal surfaces of the stopper fitting 15 and the respective facing surfaces of the contact portion 16 come into mutual contact with each other via the stopper rubber 17, it is possible to make the mutually facing surfaces come into line contact with each other at least over their entire length in the direction of their horizontal cross sections.
As a result of the above, compared with a conventional vibration-damping device, it is possible to reduce the load applied to the stopper rubber 17, and it is possible to suppress the occurrence of cracks and the like and obtain an improvement is durability.

Furthermore, in the present embodiment, because the gaps G through J between the mutually facing surfaces of the contact portion 16 of the linking component 13 and the stopper rubber 17 which are facing each other are uniform over the entire surface area of each of these mutually facing areas, it is possible to more effectively prevent an excessively large load being applied to the stopper rubber 17, and it is possible to reliably improve the durability of this vibration-damping device 10.

Moreover, in the present embodiment, because the shape of the horizontal cross section of the internal surface of the stopper fitting 15 is formed as a rectangle, and the shape of the horizontal cross section of the contact portion 16 is formed as a rectangle, namely, because the shapes of the horizontal cross sections of the internal surface of the stopper fitting 15 and the contact portion 16 are formed as polygonal shapes, it is possible to easily alter the settings for the distances C through F between the mutually facing surfaces, and thereby easily respond to modifications to the specifications of a vehicle in which this vibration-damping device 10 is installed.

Furthermore, in the present embodiment, because the stopper rubber 17 is mounted on the stopper fitting 15 and is formed as a single unit integrally with the main body rubber 14, it is possible to minimize the overall number of components in this vibration-damping device 10 and thereby limit manufacturing costs.
Moreover, because the outer circumferential surface of the contact portion 16 is not coated with a rubber material, and the metal surface is exposed, it is not necessary to perform insert molding in which a linking component 13 having this contact portion 16 is used as an insert part. As a result, it is possible to reliably limit the manufacturing costs for this vibration-damping device 10.
Furthermore, in the present embodiment, because the contact portion 16 and the main body portion 13a of the linking component 13 are formed integrally as a single body from the same material, it is possible to minimize the number of components and limit manufacturing costs even more reliably. In addition, because the flexural rigidity of the contact portion 16 is increased, it is possible to improve the durability of the contact portion 16.

Moreover, in the present embodiment, because the convex portions 20 are provided on the first internal wall surface 17a and the second internal wall surface 17b of the stopper rubber 17, after a load in the front-rear direction A has been input into the vibration-damping device 10, and the contact portion 16 and the stopper fitting 15 have been displaced relatively in a horizontal direction, and the internal surface of the stopper fitting 15 and the respective facing surfaces of the contact portion 16 come into mutual contact via the stopper rubber 17, in the process in which the contact portion 16 presses against the stopper rubber 17, the convex portions 20 are pushed down by the contact portion 16. Accordingly, it is possible to control any sudden increase in the load acting on the both the contact portion 16 and the stopper fitting 15 when the contact portion and the stopper rubber come into mutual contact. As a result, it is possible to effectively absorb the load in the front-rear direction A which has a great effect on riding comfort, and thereby provide a vehicle with superior riding comfort.

Furthermore, in the present embodiment, because the thickness of the portions of the stopper rubber 17 where the top faces of the convex portions 20 are positioned is thicker than the thickness of the portions of the stopper rubber 17 where the third internal wall surface 17c and the fourth internal wall surface 17d are positioned, in the above-described process in which the contact portion 16 presses in the stopper rubber 17, it is possible to suppress any increase in the spring constant of the stopper rubber 17.
As a result of this, it is possible to reliably provide a vehicle with even more superior riding comfort.
Moreover, in the contact portion 16 and the stopper rubber 17, because the gaps G and H in the front-rear direction A are larger than the gaps I and J in the left-right direction B, it is possible to reliably limit relative displacement of the vibration generating portion and the vibration receiving portion in the left-right direction B which has a great effect on the driving stability of a vehicle, and provide the vehicle with superior driving stability.

Furthermore, because a plurality of the convex portions 20 are formed on both the first internal wall surface 17a and the second internal wall surface 17b of the stopper rubber 17, when the contact portion 16 of the linking component 13 and the stopper fitting 15 and stopper rubber 17 are relatively displaced in a horizontal direction by a greater amount than the gaps G through J between the surfaces 16a through 16d of the contact portion 16 and the stopper rubber 17, the contact portion 16 is pressed against the convex portions 20. As a result of this, it is possible to prevent the load which is applied to a single convex portion 20 at the time of this pressing becoming excessively large, and it is possible to prevent cracks or the like being generated in the convex portions 20 and causing the durability of the stopper rubber 17 to deteriorate. In addition to this, it is possible to more reliably suppress any sudden rise in the load which is applied to both the contact portion 16 and the stopper fitting 15 when the contact portion 16 and stopper rubber 17 are in contact with each other.

Note that the technological range of the present invention is not limited to the above described embodiment, and various modifications can be made insofar as they do not depart from the spirit or scope of the present invention.
For example, in the above described embodiment, the contact portion 16 of the linking component 13 is formed such that the shape of the horizontal cross section thereof is rectangular, the stopper fitting 15 is formed such that the shape of the horizontal cross section thereof is rectangular, and the stopper rubber 17 is formed such that the shape of the horizontal cross section thereof is rectangular, however, the present invention is not limited to this and these components may also be formed in circular shapes, elliptical shapes, waveform shapes, or polygonal shapes having five or more angle portions or the like.

Moreover, in the above described embodiment, while the stopper rubber 17 is mounted on an internal surface of the stopper fitting 15, the contact portion 16 of the linking component 13 is not coated with a rubber material and the metal surface thereof is left exposed, however, conversely to this, it is also possible to mount the stopper rubber 17 on the contact portion 16, and to not coat the internal surface of the stopper fitting 15 with a rubber material and leave the metal surface thereof exposed. Moreover, while the stopper rubber 17 is mounted on an internal surface of the stopper fitting 15, it is also possible to coat the contact portion 16 of the linking component 13 with a rubber material, alternatively, while the mounting the stopper rubber 17 on the contact portion 16, it is also possible to coat the internal surface of the stopper fitting 15 with a rubber material. It is also possible to mount the stopper rubber 17 on both the contact portion 16 and the stopper fitting 15.

Furthermore, in the above described embodiment, for the stopper rubber 17 a structure is employed in which the stopper rubber 17 is formed in a rectangular tube shape whose horizontal cross section is elongated in the front-rear direction A, and the four angle portions 17e that make up this rectangle are hollowed out towards the external side of the stopper rubber 17, however, it is also possible for these angle portions 17e to not be hollowed out.
Moreover, in the above described embodiment, the convex portions 20 are formed on the first internal wall surface 17a and the second internal wall surface 17b of the stopper rubber 17, however, in the same way as the third internal wall surface 17c and the fourth internal wall surface 17d, it is also possible for the convex portions 20 to not be formed on these wall surfaces 17a and 17b.

Furthermore, in the above described embodiment, the gaps G through J between mutually facing surfaces of the contact portion 16 of the linking component 13 and the stopper rubber 17 which are facing each other are equal over the entirety of the mutually facing surface areas, however, it is also possible to make these gaps G through J different from each other. For example, if the shapes of the horizontal cross sections of the contact portion 16 are made the same as in the above described embodiment, the shapes of the horizontal cross sections of the stopper rubber 17 may be formed, for example, in circular shapes, elliptical shapes, waveform shapes, or polygonal shapes having five or more angle portions or the like. Namely, if the distances C through F between mutually facing surfaces of the internal surfaces of the stopper fitting 15 and the contact portion 16 which are facing each other are equal over the entirety of the mutually facing surface areas, then the shape of the stopper rubber 17 is not limited to that described in the above embodiment and may be appropriately modified.

Moreover, the size relationships between the distances C through F between the contact portion 16 and the stopper fitting 15 are not limited to those in the above described embodiment and may be appropriately modified. For example, the distances C and D may be smaller than the distances E and F or may be the same as these. Moreover, the distance C and the distance D may be made different from each other, and the distance E and the distance F may be made different from each other.
Furthermore, the size relationships between the distances G through J between the contact portion 16 and the stopper rubber 17 are not limited to those in the above described embodiment and may be appropriately modified. For example, the distances G and H may be smaller than the distances I and J or may be the same as these. Moreover, the distance G and the distance H may be made different from each other, and the distance I and the distance J may be made different from each other.

Moreover, in the linking component 13, the threaded shaft 13b, the contact portion 16, and the main body portion 13a may be formed integrally as a single unit. Furthermore, the linking component 13 may be formed integrally as a single body with the second main body component 12.
Furthermore, the main body rubber 14 and the stopper rubber 17 are formed integrally as a single body, however, it is also possible to form these components independently from each other, and even to form these components from mutually different rubber materials.
Moreover, a structure which is provided with the pair of leg portions 14a is employed for the main body rubber 14, however, instead of this, it is also possible, for example, to employ a tubular body which extends around the entire circumference of the circumferential direction around the center axis O.

Furthermore, in the above described embodiment, a structure is illustrated in which the vibration-damping device 10 is installed in a vehicle such as an automobile, however, the present invention is not limited to this and the vibration-damping device 10 may also be applied, for example, to industrial machinery and the like.
Moreover, in the above described embodiment, the front-rear direction A and the left-right direction B of a vehicle in which this vibration-damping device 10 is installed are designated in the vibration-damping device 10 by means of the position in the first main body component 11 where the bolt insertion hole 11a is formed, and by means of the position in the linking component 13 where the bolt insertion hole is formed, however, the present invention is not limited to this and these directions A, B may also be designated, for example, by engraving symbols or characters or the like in external surfaces or the like of the main body rubber 14, the first main body component 11, the second main body component 12, or the main body portion 13a.

### [Industrial applicability]

According to the present invention, it is possible to reduce the load which is applied to a stopper rubber located between the stopper fitting and the contact portion of a linking component in an vibration-damping device, and to thereby improve the durability of the vibration-damping device.

## Claims

1. A vibration-damping device comprising:
a first main body component that is linked to a vibration receiving portion;
a second main body component that is placed on the opposite side from a vibration generating portion so as to sandwich the first main body component;
a linking component that penetrates through the first main body component and mutually links together the second main body component and the vibration generating portion;
main body rubber that elastically links together the first main body component and the second main body component and that has the linking component inserted through its interior space;
a tubular stopper fitting that is provided on the first main body component and that surrounds from the outward side in the radial direction a rod-shaped contact portion that is provided in the linking component; and
tubular stopper rubber that is mounted on at least one of an inner surface of the stopper fitting and the contact portion, wherein
distances between mutually facing surfaces of the stopper fitting internal surfaces and the contact portion which are facing each other are uniform over the entire area of each of the facing surface areas.

2. The vibration-damping device according to claim 1, wherein the shapes of horizontal cross sections of the internal surface of the stopper fitting and the contact portion are polygonal.

3. The vibration-damping device according to claim 1, wherein the stopper rubber is mounted on the stopper fitting, and is formed integrally as a single body with the main body rubber.

4. The vibration-damping device according to claim 2, wherein the stopper rubber is mounted on the stopper fitting, and is formed integrally as a single body with the main body rubber.

5. The vibration-damping device according to any one of claims 1 through 4, wherein the vibration-damping device is installed and used in a vehicle, and at least one of the front-rear direction and left-right direction of the vehicle is designated, and when this vibration isolating apparatus is installed in a vehicle, concavity and convexity portions which face in the front-rear direction of the vehicle are formed in an internal surface of this stopper rubber.
